# DEMANDE DE BREVET EUROPEEN

(11) **EP 4 527 659 A1**
(43) Date de publication de la demande: **26.03.2025**
(21) Numéro de dépôt: 24202446.1
(22) Date de dépôt: 25.09.2024
(51) Int. Cl.: B60K 15/03, B61C 7/00, F17C 7/00, F17C 13/04

(54) **VÉHICULE, NOTAMMENT FERROVIAIRE, COMPRENANT UN SYSTÈME DE SÉCURITÉ POUR LA GESTION DE JETS D'HYDROGÈNE EXTÉRIEURS**

(30) Priorité: 25.09.2023 FR 2310114
(71) Demandeur: ALSTOM Holdings, 93400 Saint-Ouen-sur-Seine (FR)
(72) Inventeur: BOLLENGIER, Christophe, 68780 SENTHEIM (FR)
(74) Mandataire: Lavoix

(57) **Abrégé**

Véhicule (10), notamment ferroviaire, comprenant :
- au moins un réservoir d'hydrogène (16), un système de propulsion (18) pour recevoir de l'hydrogène (20) en provenance du réservoir d'hydrogène et pour propulser le véhicule,
- un système de sécurité (22) pour recevoir de l'hydrogène (24) en provenance du réservoir d'hydrogène et pour éjecter l'hydrogène reçu en dehors du véhicule.

Le système de sécurité est adapté pour produire une pluralité de jets d'hydrogène (32) dans une pluralité de directions d'éjection (J1, J2, J3) distinctes les unes des autres.

## Description

La présente invention concerne un véhicule, notamment ferroviaire, consommant de l'hydrogène pour assurer sa propulsion. L'invention concerne également un procédé de mise en sécurité d'un tel véhicule.

Actuellement, pour réduire les émissions de CO2 (dioxyde de carbone), il est envisagé d'utiliser l'hydrogène (le gaz dihydrogène) comme carburant, directement ou par l'intermédiaire d'une pile à combustible transformant l'hydrogène en électricité pouvant alimenter un moteur électrique.

Si l'hydrogène est stocké sous pression dans un réservoir embarqué, la pression de l'hydrogène peut être comprise entre 350 et 700 bars. Pour des raisons de sécurité, il est souhaitable de pouvoir vider ce réservoir rapidement. Ceci peut être réalisé en éjectant l'hydrogène hors du véhicule via une vanne de sécurité.

Toutefois, cette éjection produit une flamme très longue, pouvant s'étendre sur quelques mètres, voire quelques dizaines de mètres. La flamme est chaude, avec une température pouvant s'élever à environ 2000°C, et est en outre peu visible en extérieur, car d'un bleu très pâle par rapport à la lumière du jour.

Une telle flamme représente donc un danger potentiel pour les personnes et les équipements, par exemple une caténaire située au-dessus du véhicule.

Un but de l'invention est donc de proposer un véhicule consommant de l'hydrogène pour assurer sa propulsion et présentant une meilleure sécurité.

A cet effet, l'invention a pour objet un véhicule selon la revendication 1.

Selon des modes particuliers de réalisation, le véhicule comprend l'une ou plusieurs des caractéristiques correspondant aux revendications 2 à 9, prise(s) isolément ou selon toutes les combinaisons techniquement possibles.

L'invention a aussi pour objet un procédé selon la revendication 10.

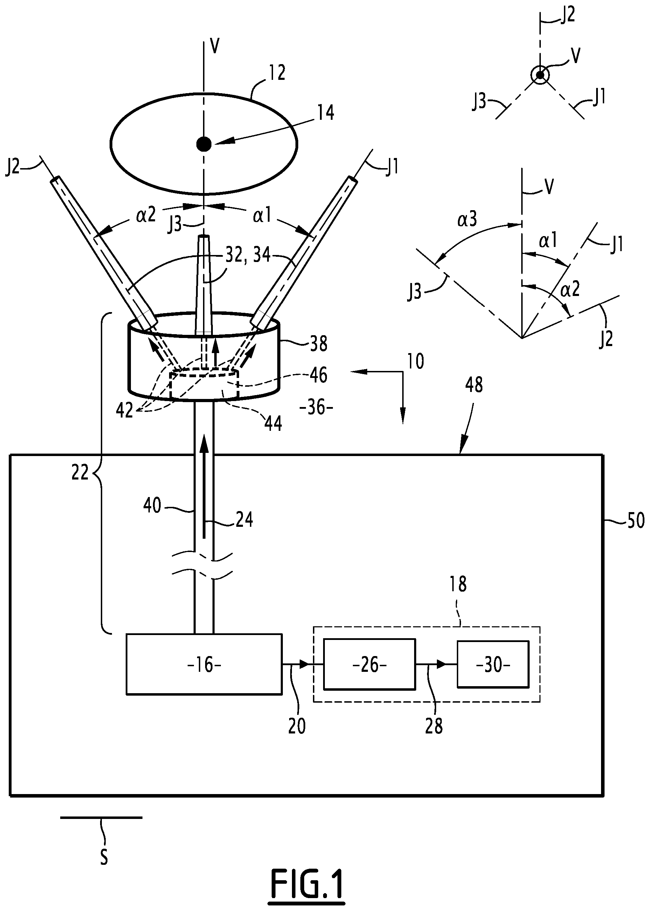

L'invention sera mieux comprise à la lecture de la description qui va suivre, donnée uniquement à titre d'exemple et faite en se référant au dessin annexé, sur lequel la figure 1 est une vue schématique d'un véhicule selon l'invention.

En référence à la figure 1, on décrit un véhicule 10 selon l'invention.

Le véhicule 10 est par exemple un véhicule ferroviaire, tel qu'un métro, un tramway, un train de banlieue, un train interurbain, un train de passagers ou une locomotive de fret.

Selon une variante non représentée, le véhicule 10 est non-ferroviaire. Par exemple, il peut s'agir d'un autocar, d'une automobile, ou d'un engin de travaux publics.

Sur la figure 1, on a également représenté une zone 12 où se trouve éventuellement une caténaire 14 (le véhicule 10 étant ferroviaire), permettant d'alimenter en électricité le véhicule 10, ou bien d'autres véhicules circulant sur une même ligne (non représentés).

Le véhicule 10 comprend au moins un réservoir d'hydrogène 16, un système de propulsion 18 adapté pour recevoir de l'hydrogène 20 en provenance du réservoir d'hydrogène 16 et pour propulser le véhicule, et un système de sécurité 22 adapté pour recevoir de l'hydrogène 24 en provenance du réservoir d'hydrogène 16 et pour éjecter l'hydrogène 24 reçu en dehors du véhicule, en cas de nécessité (pour pallier un risque d'éclatement des réservoirs par exemple).

Dans l'exemple, le système de propulsion 18 comprend une pile à combustible 26 adaptée pour recevoir l'hydrogène 20 du réservoir d'hydrogène 16 et pour produire de l'électricité 28, et un moteur électrique 30 adapté pour recevoir l'électricité 28 et assurer la propulsion du véhicule 10. Le moteur électrique 30 fait par exemple partie d'une chaîne de traction (non représentée).

Selon une variante non représentée, le système de propulsion 18 ne comprend pas de pile à combustible, et comprend un moteur thermique adapté pour brûler l'hydrogène 20 en provenance du réservoir d'hydrogène 16.

Par « hydrogène », on entend ici du dihydrogène, à une pureté avantageusement supérieure à 99% en volume.

Le réservoir d'hydrogène 16 est par exemple configuré pour contenir de l'hydrogène à une pression maximale comprise entre 350 et 700 bars absolus.

Le système de sécurité 22 est adapté, lorsqu'il est activé, pour produire une pluralité de jets d'hydrogène 32 dans une pluralité de directions d'éjection J1, J2, J3 distinctes les unes des autres.

Par exemple, les directions d'éjection J1, J2, J3 forment des angles d'inclinaison α1, α2, α3 avec une même direction de référence V, chacun des angles d'inclinaison étant compris entre 30° et 60°. La direction de référence V est par exemple définie par le véhicule 10. La direction de référence V est, dans l'exemple représenté, sensiblement verticale lorsque le véhicule 10 se déplace sur une surface horizontale S.

Ces angles α1, α2, α3 sont avantageusement choisis au cas par cas, selon le risque à éliminer. Dans l'exemple, ce risque est la caténaire 14 placée au-dessus du véhicule ferroviaire 10.

Selon une variante, le risque peut être causé par une verrière au-dessus d'un bus, etc.

Avantageusement, les directions d'éjection J1, J2, J3 sont régulièrement réparties autour de la direction de référence V.

Les jets d'hydrogène 32 sont par exemple au nombre de trois, et définissent les uns par rapport aux autres des angles de 120° environ autour de la direction de référence V.

Les jets d'hydrogène 32 sont destinés à former des flammes 34 dans l'atmosphère 36, l'hydrogène s'enflammant spontanément.

Dans l'exemple, le système de sécurité 22 comprend un corps 38, une canalisation d'entrée 40 s'étendant entre le réservoir d'hydrogène 16 et le corps 38, et une pluralité de canalisations de sortie 42 pour produire les jets d'hydrogène 32.

Par exemple, le système de sécurité 22 comprend un produit colorant 44 et est adapté pour mélanger l'hydrogène 24 reçu et le produit colorant 44 pour colorer les flammes 34, c'est-à-dire pour leur donner une couleur plus intense que celle d'une flamme d'hydrogène pur, et repérable par un observateur (non représenté) ou une caméra ordinaire en plein jour.

Colorer la flamme signifie par exemple la rendre visible, de jour, à un opérateur situé à proximité, par exemple à 20 mètres.

La coloration permet de rendre la flamme visible en plein jour (à l'image d'une flamme de propane par exemple, qui est jaune vif et visible dans toutes les conditions).

Rendre la flamme de d'hydrogène visible résout un des problèmes actuels rencontrés par les pompiers, qui sont obligés de se servir de caméras thermiques pour déterminer où attaquer la flamme. La coloration de la flamme permet de se passer de caméras thermiques.

Le système de sécurité 22 comprend avantageusement au moins une cartouche 46 contenant le produit colorant 44, et est configuré pour mettre l'hydrogène 24 reçu en contact mécanique avec la cartouche 46.

Le système de sécurité 22 est avantageusement adapté pour créer une perte de charge entre le réservoir d'hydrogène 16 et les canalisations de sortie 42, ce qui permet de réduire la longueur des flammes 34 par la réduction de pression induite par la multiplication des canalisations de sortie.

La cartouche 46 est par exemple située dans le corps 38 et est destinée à être remplacée par une cartouche neuve après un ou plusieurs usages du système de sécurité 22 (c'est-à-dire une ou plusieurs vidanges du réservoir d'hydrogène 16).

Le corps 38 est par exemple situé sur un toit 48 défini par une caisse 50 du véhicule 10.

Le produit colorant 44 comprend par exemple du carbone ou un sel chimique. Il peut s'agir d'une pastille de carbone pour avoir une flamme jaune vif par exemple.

Le produit colorant 44 est par exemple sous forme de poudre (sels de sodium ou calcium par exemple, pour colorer la flamme en jaune ou orangé visible, sels de potassium pour une flamme violette visible, ou même carbone en poudre). Si un produit tel que le chlorure de sodium est choisi, alors il s'agit d'un produit inoffensif (sel de cuisine).

Le fonctionnement du véhicule 10 découle de sa structure et va maintenant être brièvement décrit. Ce fonctionnement illustre un procédé selon l'invention.

En fonctionnement normal, la pile à combustible 26 reçoit l'hydrogène 20, le transforme en l'électricité 28 qui alimente le moteur électrique 30. Le moteur électrique 30 propulse le véhicule 10.

Si, pour une raison ou une autre, le véhicule 10 doit être mis en sécurité par une vidange du réservoir d'hydrogène 16, l'hydrogène 24 en provenance du réservoir d'hydrogène 16 est reçu par le système de sécurité 22, et éjecté en dehors du véhicule 10. Cela produit la pluralité de jets d'hydrogène 32 dans les directions d'éjection J1, J2, J3.

Grâce aux caractéristiques décrites ci-dessus, les flammes 34 sont moins longues, toutes choses égales par ailleurs, que celle qui serait créée par l'éjection de l'hydrogène 24 dans la direction de référence V. En outre, les flammes 34 sont divisées. Par exemple, les flammes 34 divisées permettent d'éviter la zone 12 où se situe la caténaire 14.

La coloration optionnelle des flammes 34 par le produit colorant 44 permet de les visualiser et d'éliminer ou de réduire le risque d'atteinte aux personnes ou aux équipements situés à proximité, tels que la caténaire 14.

## Revendications

1. Véhicule (10), notamment ferroviaire, comprenant :
- au moins un réservoir d'hydrogène (16), un système de propulsion (18) adapté pour recevoir de l'hydrogène (20) en provenance du réservoir d'hydrogène (16) et pour propulser le véhicule (10), et
- un système de sécurité (22) adapté pour recevoir de l'hydrogène (24) en provenance du réservoir d'hydrogène (16) et pour éjecter l'hydrogène (24) reçu en dehors du véhicule (10),
le système de sécurité (22) étant adapté pour produire une pluralité de jets d'hydrogène (32) dans une pluralité de directions d'éjection (J1, J2, J3) distinctes les unes des autres.

2. Véhicule (10) selon la revendication 1, dans lequel les directions d'éjection (J1, J2, J3) forment des angles d'inclinaison (α1, α2, α3) avec une même direction de référence (V), chacun des angles d'inclinaison (α1, α2, α3) étant compris entre 30° et 60°.

3. Véhicule (10) selon la revendication 2, dans lequel la direction de référence (V) est définie par le véhicule (10) et est sensiblement verticale lorsque le véhicule (10) se déplace sur une surface horizontale (S).

4. Véhicule (10) selon la revendication 2 ou 3, dans lequel les directions d'éjection (J1, J2, J3) sont régulièrement réparties autour de la direction de référence (V).

5. Véhicule (10) selon l'une quelconque des revendications 1 à 4, dans lequel les jets d'hydrogène (32) sont destinés à former des flammes (34) dans l'atmosphère (36), le système de sécurité (22) comprenant un produit colorant (44) et étant adapté pour mélanger l'hydrogène (24) reçu et le produit colorant (44) pour colorer les flammes (34).

6. Véhicule (10) selon la revendication 5, dans lequel le système de sécurité (22) comprend un corps (38), une canalisation d'entrée (40) s'étendant entre le réservoir d'hydrogène (16) et le corps (38), et une pluralité de canalisations de sortie (42) pour produire les jets d'hydrogène (32).

7. Véhicule (10) selon la revendication 5 ou 6, dans lequel le système de sécurité (22) comprend au moins une cartouche (46) contenant le produit colorant (44), et est configuré pour mettre l'hydrogène (24) reçu par le système de sécurité (22) en contact mécanique avec la cartouche (46).

8. Véhicule (10) selon l'une quelconque des revendications 5 à 7, dans lequel le produit colorant (44) comprend du carbone ou un sel chimique.

9. Véhicule (10) selon l'une quelconque des revendications 1 à 8, comprenant en outre :
- au moins une pile à combustible (26) adaptée pour recevoir de l'hydrogène (20) du réservoir d'hydrogène (16) et pour produire de l'électricité (28), et
- au moins un moteur électrique (30) adapté pour recevoir l'électricité (28).

10. Procédé de mise en sécurité d'un véhicule (10) selon l'une quelconque des revendications 1 à 9, comprenant les étapes suivantes :
- réception de l'hydrogène (24) en provenance du réservoir d'hydrogène (16) par le système de sécurité (22), et
- éjection de l'hydrogène (24) reçu en dehors du véhicule (10), et production de la pluralité de jets d'hydrogène (32) dans la pluralité de directions d'éjection (J1, J2, J3).
